# EUROPEAN PATENT SPECIFICATION

(11) **EP 1 566 983 B1**
(45) Date of publication and mention of the grant of the patent: **13.05.2009**
(21) Application number: 05100766.4
(22) Date of filing: 04.02.2005
(51) Int. Cl.: H04W 36/08

(54) **Enhanced inter-system handover in a telecommunications system**
Zwischen-System Weiterreichen in einem Telekommunikationssystem
Transfert intersysteme amelioré dans un système de télécommunication

(30) Priority: 18.02.2004 FI 20040259
(43) Date of publication of application: 24.08.2005
(60) Divisional application: 06121783.2
(73) Proprietor: TeliaSonera Finland Oyj, 00510 Helsinki (FI)
(72) Inventor: Heikkilä, Tommi, 00200, Helsinki (FI)
(74) Representative: Äkräs, Tapio Juhani

(56) References cited:
- WO-A-01/67788
- WO-A-01/76313
- WO-A-02/11485
- US-A- 5 940 762
- "Digital cellular telecommunications system (Phase 2+); Radio subsystem link control (3GPP TS 45.008 version 4.7.0 Release 4); ETSI TS 145 008" ETSI STANDARDS, EUROPEAN TELECOMMUNICATIONS STANDARDS INSTITUTE, SOPHIA-ANTIPO, FR, vol. 3-G1, no. V470, February 2002 (2002-02), XP014010687 ISSN: 0000-0001
- CRAIG S ET AL: "Efficient broadcast frequency utilization - a key to high capacity cellular networks" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 917-921Vol2, XP010700938 ISBN: 0-7803-7954-3

## Description

### FIELD OF THE INVENTION

The invention relates to performing of a handover of a call in a mobile communications system, and more particularly to a handover between different radio access systems.

### BACKGROUND OF THE INVENTION

In the 3^{rd} generation (3G) mobile communications system, in addition to the 3G radio access network UTRAN (Universal Terrestrial Radio Access Network), there may coexist different types of radio access networks, such as a BSS (Base Station Subsystem) of the GSM (Global System for Mobile Communications). Thus a Mobile Station (MS) should be able to fluently change the radio access network when required to gain full radio coverage at an area even if the cells of the radio access networks apply different radio access techniques.

In a cellular mobile communications system, the action of switching from one radio channel to another, during a connection, such as an on-going call, is commonly known as a handover. Switching from one radio channel to another is performed typically when a mobile station moves from the area of one cell to another. In the 3G mobile communications system, different types of handovers may be performed, such as soft handover, softer handover, inter-frequency handover, intra-frequency handover and inter-system handover. When the mobile station changes the radio access network, e.g. from UTRAN to BSS, during a call, an inter-system handover is performed. The inter-system handover may also be referred to as an inter-RAT (Radio Access Technology) handover.

According to the 3GPP (3^{rd} Generation Partnership Project) specifications, the MS measures the signal strength of the GSM cells nearby, and a Radio Network Controller (RNC) of UTRAN requests the MS to verify a Base Station Identity Code (BSIC) of the target cell before the execution of the inter-RAT handover from UTRAN to BSS. Usually it takes the mobile station about 2 to 3 seconds to verify the correct BSIC. The GSM cell is chosen by the RNC, based on the measured signal strength. If the BSIC is not verified by the mobile station for some time, the RNC sends again information on the nearby GSM cells, and the MS starts to measure them again.

One of the problems associated with the above arrangement is that the BSIC of the GSM cell may be inserted wrongly into the UTRAN Operation and Maintenance system (O&M). In that case the mobile station is not able to verify the GSM cell's BSIC, which the RNC has informed of. Also the mobile may behave erroneously when verifying the BSIC. The inter-system handover algorithm in the RNC may e.g. keep suggesting the same cell again and again for BSIC verification even if there could be other cells with correct BSlC's, or even if the mobile station were defective so that it is not able to perform the BSIC verification at all. This may lead to an endless loop, which exploits the resources of the system; for example, a large number of measurements in Compressed Mode (CM) may lead to a UTRAN overload causing dropping of calls and data connections.

### BRIEF DESCRIPTION OF THE INVENTION

An object of the present invention is thus to provide a method, system and an apparatus for implementing the method so as to overcome the above problems. The objects of the invention are achieved by a method system and an apparatus, which are characterized by what is stated in the independent claims. Embodiments of the invention are disclosed in the dependent claims.

The solution of the present application is based on providing a method for managing the handover of a connection, such as a call between different radio access systems. The method comprises transmitting, from a radio network controller to the mobile station, a list of base stations on which perform measurements, and of their respective base station identity codes BSlC, selecting, in the mobile station, one of said base stations for handover and verify its base station identity code BSIC, and requesting, before the handover of the connection from the first cell to the second cell, the mobile station to verify the identity information on said second cell. In the system one or more criteria are predetermined for monitoring eventual unsuccessful attempts to perform a handover of the connection from a first cell of a first access system to a second cell of a second access system. According to the solution, verification of the identity information on the second cell is based on a base station identity code BSlC transmitted from a radio network controller to a mobile station. According to the solution, the handover of the connection to said second cell is discontinued, if the verification of said identity information is unsuccessful and if at least one threshold criterion relating to handover to
said second cell is fulfilled, wherein the base stations, whose base station identity code BSIC has not been verified, are removed from said list in the radio network controller when a next handover measurement is required.

According to an embodiment, the first access system refers to UTRAN, and the second access system refers to GSM BSS. The criteria may comprise e.g. a maximum time allowed for the verification of the identity information on the new cell, and/or a maximum number of verification attempts allowed.

An advantage of the method and arrangement of the present solution is that defective cells may be recognized by the system, and the system may stop suggesting a handover to the defective cells. An endless loop may be prevented, and the system may readily start suggesting a new cell as a second candidate cell instead of the first candidate cell, if the handover to the first candidate cell is not possible. Thus valuable information may be provided to the operation and management system of the mobile network so that the operation of the defective cells may be corrected. Also defective mobile stations may be recognized.

### BRIEF DESCRIPTION OF THE DRAWINGS

In the following the invention will be described in greater detail by means of embodiments with reference to the accompanying drawings, in which
Figure 1 illustrates the mobile communications system according to an embodiment of the present solution;
Figure 2 is a flow chart illustrating the method according to the embodiment of the present solution;
Figure 3 illustrates the mobile communications system according to another embodiment of the present solution;
Figure 4 is a flow chart illustrating the method according to another embodiment of the present solution.

### DETAILED DESCRIPTION OF THE INVENTION

Preferred embodiments of the invention will be described below with reference to a 3G WCDMA (Wideband Code Division Multiple Access) mobile communication system, such as the UMTS (Universal Mobile Telecommunications System), and a 2G mobile communication system, such as the GSM. However, the invention is not restricted to these embodiments, but it may be applied in any mobile communication system implementing two or more different radio access systems. Other examples of such systems are IMT-2000, IS-41 or other similar mobile communication systems, such as the PCS (Personal communication system) or the DCS 1800 (Digital cellular system for 1800 MHz), and systems implementing UMTS TDD (Time Division Duplex) or UMTS FDD (Frequency Division Duplex). Specifications of mobile systems in general and of the IMT-2000 and the UMTS in particular develop rapidly. Such development may require additional changes to be made to the invention. Therefore, all the words and expressions should be interpreted as broadly as possible and they are only intended to illustrate and not to restrict the invention. What is essential for the invention is the function itself and not the network element or the device in which the function is implemented.

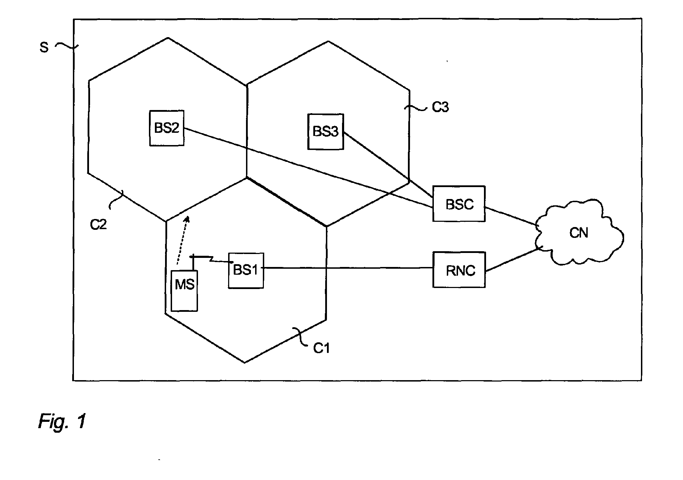

Figure 1 shows a simplified version of the mobile communications system architecture, illustrating only components that are essential to the invention, even though those skilled in the art naturally know that a general mobile communication system also comprises other functions and structures, which do not have to be described in more detail herein. The main parts of the UMTS are a Core Network CN, a UMTS radio access network UTRAN (not indicated in Figure 1) and a mobile station MS, which may also be referred to as user equipment (UE). The UTRAN is a theoretical concept for the 3G radio access network comprising Radio Network Controllers RNC and Base Stations BS1. Accordingly, the BSS (not indicated in Figure 1) is a theoretical concept for the 2G radio access network comprising Base Station Controllers BSC and Base Stations BS2, BS3. The Radio Network Controller RNC is a network node, which controls UTRAN radio resources. In Figure 1, RNC and BSC are connected to the Core Network CN. The Core Network CN comprises network nodes (not shown) such as a Serving GPRS Support Node (SGSN) and a Mobile Switching Centre (MSC). In practice, BSS and UTRAN share some of the core network nodes, but there may also be core network nodes that are not shared, such as separate SGSN's for the 2G and 3G networks.

The core network CN may be connected to external networks (not shown), which may be Circuit-Switched (CS) networks, such as a Public Land Mobile Network (PLMN), a Public Switched Telephone Network (PSTN), and an Integrated Services Digital Network (ISDN), or Packet-Switched (PS) networks, such as the Internet and X.25.

The Mobile Station MS may be a simplified terminal intended only for speech, or it may be a terminal for multiple services operating as a service platform and supporting the loading and execution of different service-related functions. The Mobile Station MS comprises actual mobile equipment (ME) and an associated removable identification card USIM (Universal Subscriber Identity Module), which is also called a subscriber identity module. In this connection, a Mobile Station MS (i.e. user equipment) generally refers to an entity of the actual terminal and the subscriber identity module.

Referring to Figure 1, the system S of the present solution comprises at least one cell of a first access system, for example a UTRAN cell C1 of the UMTS, and at least one cell of a second access system, for example BSS cell C2, C3 of the GSM. For reasons of clarity, only three cells C1, C2, C3 are shown. It is obvious to a person skilled in the art that a mobile communications system may comprise more than three cells. The mobile station MS is located in the area of C1. It is moving towards the area of C2 as indicated by an arrow with a dashed line. If MS is having an on-going connection, such as a call, a handover of the connection from C1 to C2 has to be conducted so that MS will be able to continue the connection in C2.

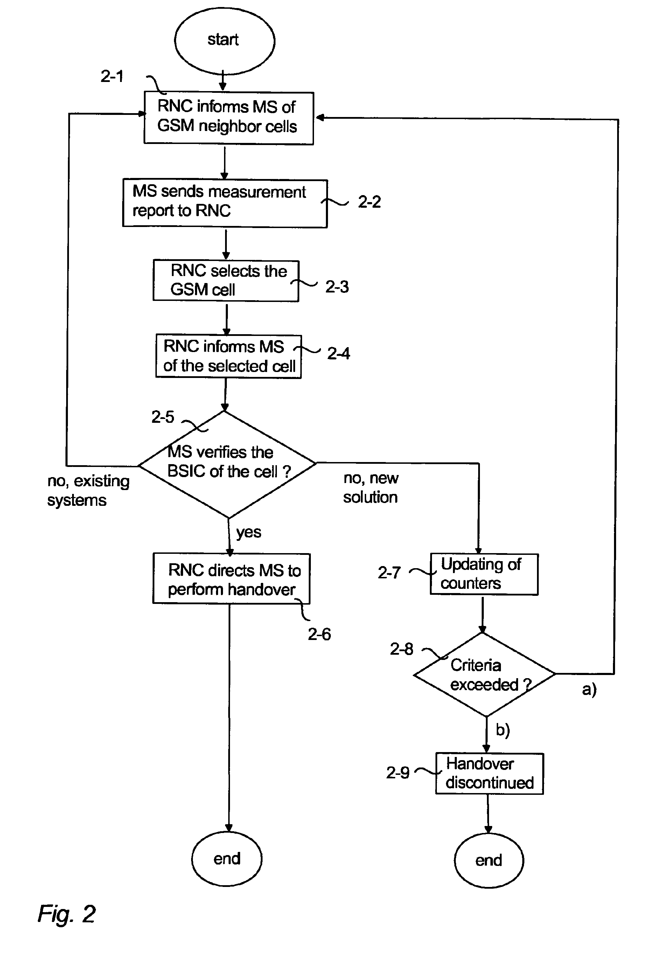

Referring to Figure 2, a flow chart illustrating the method of the invention is shown. It is assumed that MS is located in the cell C1 and moving towards the cell C2 of Figure 1. The handover process of the connection from C1 to C2 begins such that, in step 2-1, RNC informs MS of the neighbouring GSM cells C2, C3 and their frequencies. RNC sends to MS a list comprising information of potential inter-RAT cells C2, C3 and their BSICs, requests MS to remove the information on eventual earlier inter-RAT cells from its memory and to conduct measurements on the potential cells C2, C3 (measurement command message). By means of the BSIC code, MS is able to identify two or more neighboring GSM cells having the same BCCH (Broadcast Control CHannel) frequency. The BSIC code comprises a Network Colour Code (NCC) and a Base Station Colour Code (BCC). In step 2-2, MS conducts measurements on the frequencies of the potential inter-RAT cells C2, C3, such as measurements of the signal strength and quality, and transmits the results to RNC (measurement report message). Based on the results, in step 2-3, RNC selects the best cell, for example the cell having the strongest signal strength. In step 2-4, RNC informs MS of the selected cell, and requests MS to remove the information on the other inter-RAT cells from its memory and to verify the BSIC of the selected cell. In step 2-5, MS tries to verify the BSIC of the selected cell. If the verification of the BSIC is successful, the MS reports this to RNC, and in step 2-6, the RNC requests MS to perform the handover to the selected GSM cell, for example to the cell C2.

In existing systems, if MS is not able to verify the BSIC in step 2-5, the process then returns to step 2-1, where RNC informs MS of the neighbouring GSM cells C2, C3. Then the system would ignore the failed verification of the BSIC, and it would probably suggest a handover to the same cell again as described above with reference to steps 2-1 to 2-5. Thus in existing systems, the handover process may end up into an endless loop because of the failed BSIC verification in step 2-5.

In an embodiment of the present solution, if MS is not able to verify the BSIC in step 2-5, RNC updates one or more counters in step 2-7, and checks in step 2-8 if one or more predefined threshold criteria is fulfilled by comparing the value of the counters to the respective criteria. If the criteria is not exceeded, the handover process a) returns to step 2-1, and continues from there on. However, if at least one criterion is fulfilled in step 2-8, RNC may stop suggesting this GSM cell to MS, i.e. exclude the cell from the list of potential inter-RAT cells, and the handover process may a) return to step 2-1, and continue from there on, or b) it may be discontinued in step 2-9. The criteria may comprise e.g. following situations: 1) the BSIC verification has not occurred during a time X (for example in seconds or milliseconds), 2) RNC has received a number Y of consecutive measurement report messages from MS during a time Z (for example in milliseconds or seconds), 3) RNC has transmitted to MS a number W of consecutive measurement command messages, and/or 4) a number Q of activations of the compressed mode measurements during a time G (for example in seconds or milliseconds) have occurred. X, Y, Z, W, Q and G are parameters that can be predefined in the system by the operator. They may be applied simultaneously, or one or more may be applied separately. Also other criteria may be applied instead or in addition to them. The compressed mode is a way to make room (i.e time slots) for the mobile station so that it can perform measurements on another system, e.g. on GSM cells, in order to define the radio carrier signal level to provide a Receiving Signal Strength Indicator (RSSI) value and to verify BSIC.

If BSIC verification attempts fail to a certain GSM cell, this may be reported to the operation and maintenance system of UTRAN. This function may need counters implemented advantageously into RNC. RNC collects information of the UTRAN cells that have been connected to a mobile station when the BSIC verification has failed. It is checked which UTRAN cells have as a neighbour cell the GSM cell the BSIC of which could not be verified. Those UTRAN cells are kept on the list and the following counters are updated if BSIC verifications fail during a time H (e.g. hours, weeks or months): 1) number of BSIC verification failures from a GSM neighbour cell, 2) number of BSIC verification failures by a certain mobile station (erroneously working mobile), 3) number of consecutive BSIC verification failures from a GSM cell having a RSSI value equal to or over I dBm, 4) number of consecutive BSIC verification failures from a GSM cell having a RSSI value equal to or over J dBm by a certain mobile station (erroneously working mobile), 5) F consecutive BSIC verification failures from a GSM neighbour cell having a RSSI value equal to or over L dBm, 6) K consecutive BSIC verification failures from a GSM neighbour cell having a RSSI value equal to or over M dBm by a certain mobile station (erroneously working mobile). H, I, J, F, K, L, M are parameters that can be set up in RNC and/or O&M of UTRAN.

According to yet another embodiment, if the handover to a first GSM cell fails, the system will suggest a handover to a second GSM cell.

According to yet another embodiment, the predefined threshold criterion may be cell-specific, connection-specific and/or mobile station specific.

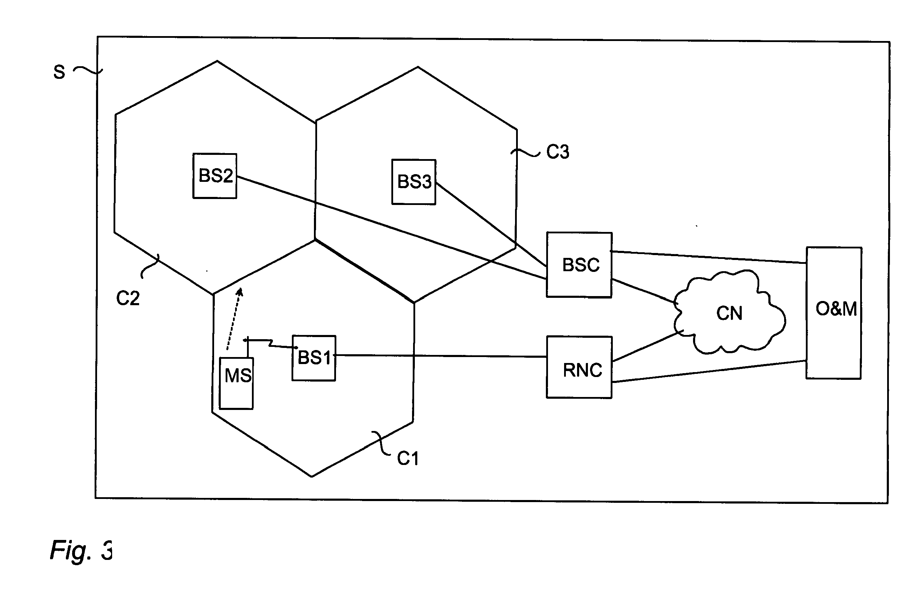

According to yet another embodiment, the UTRAN and GSM systems have a common operation and management system. This is illustrated in Figure 3, which corresponds to Figure 1 with the exception that the common operation and management system O&M shared by the GSM system and the UMTS system is shown.

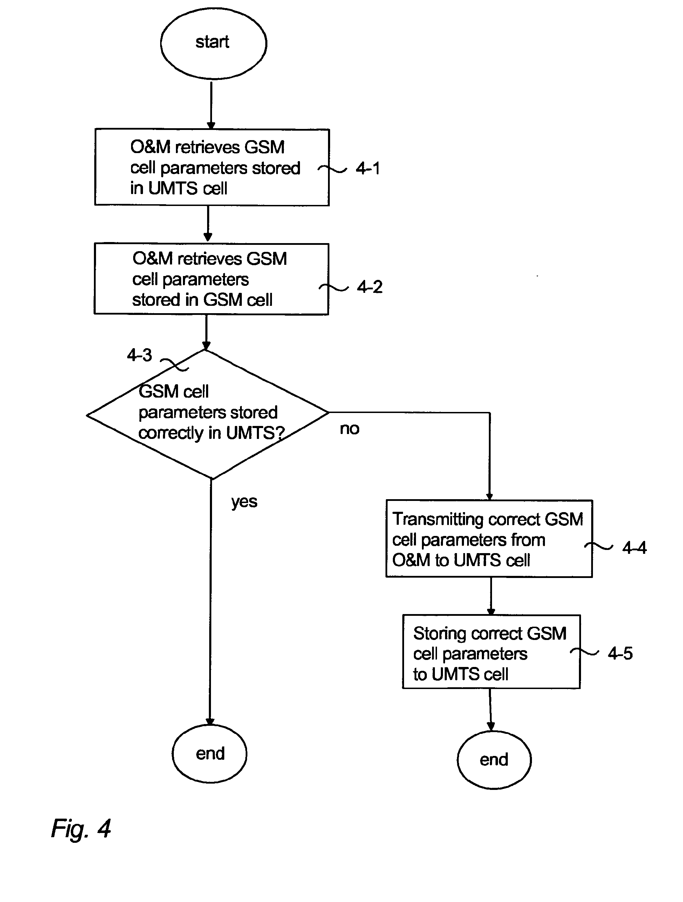

Cell Identity is a parameter by which a cell is identified within one location area. Information on the Cl of a neighbour GSM cell is stored in the UTRAN cell. According to yet another embodiment, the Cl of the GSM cell stored in the UTRAN cell is compared with the Cl maintained in the O&M system. This enables finding of the UTRAN cells wherein incorrect information on GSM cell parameters is stored. Thus the incorrect information can be rectified. This is illustrated in Figure 4, as in step 4-1, O&M retrieves the Cl of the GSM cell stored in the UTRAN cell. In step 4-2, O&M retrieves the Cl of the GSM cell stored in the GSM cell, i.e. the correct Cl. The correct Cl may also already be stored in the O&M. In step 4-3, O&M compares the Cl of the GSM cell stored in the UTRAN cell with the correct Cl. If an error is detected, O&M transmits 4-4 the correct Cl to the UTRAN cell, and the correct Cl value is stored in the UTRAN cell in step 4-5.

According to yet another embodiment, the BSIC, MCC (Mobile Country Code), MNC (Mobile Network Code), LAC (Location Area Code), RAC (Routing Area Code), CH (GSM Channel Number), NCC (Network Color Code) and/or BCC (Base station Color Code) of the GSM cell stored in the UTRAN cell is compared with the BSIC, MCC, MNC, LAC, RAC, CH, NCC and/or BCC of the GSM cell stored in the GSM cell and/or O&M system, respectively. Eventual incorrect information can then be rectified as described above with reference to Figure 4.

According to yet another embodiment, the BSIC, Cl, MCC, MNC, LAC, RAC, CH, NCC and/or BCC of the UTRAN cell stored in the GSM cell are compared with the BSIC, MCC, MNC, LAC, RAC, CH, NCC and/or BCC of the UTRAN cell stored in the UTRAN cell and/or O&M system, respectively. Eventual incorrect information can then be rectified.

The steps shown in Figure 2 are not in an absolute chronological order, and they can be executed in a different order from the given one. Other messages can be transmitted and/or other functions can be carried out between the steps. The messages are only examples and can include only some of the aforementioned information. The messages can also include some other information. It is not essential for the invention in which messages the information is transmitted or which functions and/or equations are used, but it is also possible to use other messages, functions and/or equations than those described above.

In addition to prior art devices, the system, system nodes or mobile stations implementing the operation according to the invention comprise means for updating the threshold counters as described above. The existing network nodes and mobile stations comprise processors and memory, which can be used in the functions according to the invention. All the changes needed to implement the invention can be carried out by means of software routines that can be added or updated and/or routines contained in application specific integrated circuits (ASIC) and/or programmable circuits, such as an electrically programmable logic device EPLD or a field programmable gate array FPGA.

It will be obvious to a person skilled in the art that, as the technology advances, the inventive concept can be implemented in various ways. The invention and its embodiments are not limited to the examples described above but may vary within the scope of the claims.

## Claims

1. A method for managing a handover of a connection from a first radio access system to a second radio access system in a cellular telecommunications system, comprising
at least a first cell (C1) of the first access system,
at least a second cell, (C2, C3) of the second access system, and
a mobile station,
the method comprising
transmitting, from a radio network controller (RNC) to the mobile station (MS), a list of base stations on which perform measurements, and of their respective base station identity codes BSIC,
selecting, in the mobile station (MS), one of said base stations for handover and verify its base station identity code BSIC, and
requesting (2-4), before the handover of the connection from the first cell (C1) to the second cell (C2, C3), the mobile station (MS) to verify the identity information on said second cell,
**characterized in that** the verification of said identity information is based on the respective base station identity code BSIC transmitted from the radio network controller (RNC) to the mobile station (MS), wherein the method comprises
predetermining at least one threshold criterion relating to the handover of the connection to said second cell; and
discontinuing (2-9) the handover of the connection to said second cell, if the verification of said identity information is unsuccessful and if said least one threshold criterion relating to handover to said second cell is fulfilled, wherein the base stations, whose base station identity code BSlC has not been verified, are removed from said list in the radio network controller (RNC) when a next handover measurement is required.

2. The method according to claim 1, **characterized** further by providing a handover of the connection to a cell other than the second cell, if the verification of said identity information is unsuccessful and if at least one threshold criterion relating to handover to said second cell is fulfilled.

3. The method according to claim 1 or 2, **characterized by** the threshold criterion comprising a maximum time limit for verifying the identity information on a certain cell.

4. The method according to claim 1, 2 or 3, **characterized by** the threshold criterion comprising a maximum number of consecutive verification attempts of the identity information on a certain cell.

5. The method according to any of the preceding claims 1 to 4, **characterized by** the threshold criterion comprising a maximum number of consecutive verification attempts of the identity information of a certain cell within a certain time.

6. The method according to any of the preceding claims 1 to 5, **characterized in that** the threshold criterion is cell-specific.

7. The method according to any of the preceding claims 1 to 6, **characterized in that** the threshold criterion is connection-specific.

8. The method according to any of the preceding claims 1 to 7; **characterized in that** the threshold criterion is mobile station specific.

9. The method according to any of the preceding claims 1 to 8, **characterized in that** the threshold criterion is signal strength specific.

10. The method according to any of the preceding claims 1 to 9, **characterized in that** the first access system is a UMTS radio access network (RAN).

11. The method according to any of the preceding claims 1 to 10, **characterized in that** the second access system is a GSM base station subsystem (BSS).

12. The method according to any of the preceding claims 1 to 11, **characterized by** reporting the failed handover to the operation and maintenance system of the telecommunications system.

13. The method according to any of the preceding claims 1 to 12, **characterized by** the radio network controller
predetermining at least one threshold criterion relating to the handover of the connection to said second cell; and
ceasing to suggest a handover to the second cell after a predefined number of connections with failed handovers to said cell.

14. A cellular telecommunications system (S) comprising
at least a first cell (C1) of a first access system,
at least a second cell (C2, C3) of a second access system, and
a mobile station (MS),
wherein the system (S) is configured to
transmit, from a radio network controller (RNC) to the mobile station (MS), a list of base stations on which perform measurements, and of their respective base station identity codes BSIC,
select, in the mobile station (MS), one of said base stations for handover and verify its base station identity code BSIC, and
request, before the handover of a connection from the first cell (C1) to the second cell (C2, C3), the mobile station (MS) to verify the identity information of said second cell (C2, C3),
**characterized in that** the verification of said identity information is based on the respective base station identity code BSlC transmitted from the radio network controller (RNC) to the Mobile station (MS), wherein the system is configured to
predetermine at least one threshold criterion relating to the handover of the connection to said second cell (C2, C3); and
discontinue the handover of the connection to said second cell (C2, C3), if the verification of said identity information is unsuccessful and if said at least one threshold criterion relating to handover to said second cell (C2, C3) is fulfilled, wherein the radio network controller (RNC) is adapted to remove from said list, when a next handover measurement is required, the base stations whose base station identity code BSIC has not been verified.

15. The system according to claim 14, **characterized** further in that it is configured to provide a handover of the connection to a cell other than the second cell, if the verification of said identity information is unsuccessful and if at least one threshold criterion relating to handover to said second cell is fulfilled.

16. The system according to claim 14 or 15, **characterized in that** the first access system is the radio access network UTRAN of the UMTS.

17. The system according to claim 14, 15 or 16, **character** - **ized** in that the second access system is a base station subsystem BSS of the GSM.

18. The system according to any of the preceding claims 14 to 17, **characterized in that** it is configured to report the failed handover to the operation and maintenance system.

19. A radio network controller (RNC) in a cellular telecommunications system (S) comprising
at least a first cell (C1) of a first access system,
at least a second cell (C2, C3) of a second access system, and
a mobile station (MS),
wherein the radio network controller (RNC) is arranged to
transmit to the mobile station (MS), a list of base stations on which perform measurements, and of their respective base station identity codes BSlC, and,
before the handover of a connection from the first cell (C1) to the second cell (C2, C3), request the mobile station (MS) to verify of the identity information on said second cell,
**characterized in that** the verification of said identity information is based on the respective base station identity code BSIC transmitted from the radio network controller (RNC) to the mobile station (MS), wherein the radio network controller (RNC) is arranged to
maintain at least one threshold criterion relating to the handover of the connection to said second cell; and
discontinue the handover of the connection to said second cell (C2, C3), if the verification of said identity information is unsuccessful and if said at least one threshold criterion relating to handover to said second cell is fulfilled, wherein the radio network controller (RNC) is adapted to remove from said list, when a next handover measurement is required, the base stations whose base station identity code BSIC has not been verified.

20. The radio network controller (RNC) according to claim 19, **characterized** further in that it is arranged to, if the verification of said identity information is unsuccessful and if at least one threshold criterion relating to handover to said second cell is fulfilled, provide a handover of the connection to a cell other than the second cell.

21. The radio network controller (RNC) according to claims 20 or 20, **characterized in that** it is arranged to report a failed handover to the operation and maintenance system.

## Patentansprüche

1. Verfahren zur Verwaltung eines Handovers einer Verbindung von einem ersten Funkzugangssystem zu einem zweiten Funkzugangssystem in einem zellulären Telekommunikationssystem mit
zumindest einer ersten Zelle (C1) des ersten Zugangssystems,
zumindest einer zweiten Zelle (C2, C3) des zweiten Zugangssystems und
einer Mobilstation,
bei welchem Verfahren
eine Liste von zu messenden Basisstationen und deren jeweiligen Basisstationskennungen BSIC von einem Funknetz-Controller (RNC) der Mobilstation (MS) übertragen wird,
in der Mobilstation (MS) eine der besagten Basisstationen für Handover ausgewählt und ihre Basisstationskennung BSIC verifiziert wird und
die Mobilstation (MS) angefordert wird (2-4), vor dem Handover der Verbindung von der ersten Zelle (C1) zur zweiten Zelle (C2, C3) die Kennungsinformation über die besagte zweite Zelle zu verifizieren,
**dadurch gekennzeichnet, dass** die Verifizierung der besagten Kennungsinformation auf der jeweiligen, vom Funknetz-Controller (RNC) der Mobilstation (MS) übertragenen Basisstationskennung BSIC basiert, bei welchem Verfahren:
zumindest ein Schwellenkriterium vorbestimmt wird, das sich auf das Handover der Verbindung zur besagten zweiten Zelle bezieht, und
das Handover der Verbindung zur besagten zweiten Zelle unterbrochen wird (2-9), falls die Verifizierung der besagten Kennungsinformation erfolglos ist und falls das besagte zumindest eine auf das Handover zur besagtem zweiten Zelle bezogene Schwellenkriterium erfüllt wird, wobei die Basisstationen, deren Basisstationskennung BSIC nicht verifiziert worden ist, aus der Liste im Funknetz-Controller (RNC) gelöscht werden, wenn eine nächste Handover-Messung benötigt wird.

2. Verfahren nach Anspruch 1, **dadurch gekennzeichnet, dass** ferner ein Handover der Verbindung zu einer anderen Zelle als der zweiten Zelle bereitgestellt wird, falls die Verifizierung der besagten Kennungsinformation erfolglos ist and falls zumindest ein auf das Handover zur besagten zweiten Zelle bezogene Schwellenkriterium erfüllt wird.

3. Verfahren nach Anspruch 1 oder 2, **dadurch gekennzeichnet, dass** das Schwellenkriterium eine Maximalfrist für Verifizierung der Kennungsinformation über eine bestimmte Zelle aufweist.

4. Verfahren nach Anspruch 1, 2 oder 3, **dadurch gekennzeichnet, dass** das Schwellenkriterium eine maximale Anzahl von aufeinanderfolgenden Versuchen für Verifizierung der Kennungsinformation über eine bestimmte Zelle aufweist.

5. Verfahren nach einem der vorhergehenden Ansprüche 1 bis 4, **dadurch gekennzeichnet , dass** das Schwellenkriterium eine maximale Anzahl von aufeinanderfolgenden Versuchen für Verifizierung der Kennungsinformation über eine bestimmte Zelle innerhalb einer bestimmten Zeit aufweist.

6. Verfahren nach einem der vorhergehenden Ansprüche 1 bis 5, **dadurch gekennzeichnet , dass** das Schwellenkriterium zellenspezifisch ist.

7. Verfahren nach einem der vorhergehenden Ansprüche 1 bis 6, **dadurch gekennzeichnet , dass** das Schwellenkriterium verbindungsspezifisch ist.

8. Verfahren nach einem der vorhergehenden Ansprüche 1 bis 7, **dadurch gekennzeichnet , dass** das Schwellenkriterium mobilstationsspezifisch ist.

9. Verfahren nach einem der vorhergehenden Ansprüche 1 bis 8, **dadurch gekennzeichnet , dass** das Schwellenkriterium signalstärkespezifisch ist.

10. Verfahren nach einem der vorhergehenden Ansprüche 1 bis 9, **dadurch gekennzeichnet , dass** das erste Zugangssystem ein UMTS-Funkzugangsnetz (RAN) ist.

11. Verfahren nach einem der vorhergehenden Ansprüche 1 bis 10, **dadurch gekennzeichnet , dass** das zweite Zugangssystem ein GSM-Basisstationsteilsystem (BSS) ist.

12. Verfahren nach einem der vorhergehenden Ansprüche 1 bis 11, **dadurch gekennzeichnet , dass** das gescheiterte Handover dem Betriebs- und Wartungssystem des Telekommunikationssystems gemeldet wird.

13. Verfahren nach einem der vorhergehenden Ansprüche 1 bis 12, **dadurch gekennzeichnet , dass** der Funknetz-Controller
zumindest ein auf das Handover der Verbindung zur besagten zweiten Zelle bezogenes Schwellenkriterium vorbestimmt und
aufhört, ein Handover zur zweiten Zelle vorzuschlagen, nachdem auf einer vorbestimmten Anzahl von Verbindungen Handovers zur besagten Zelle gescheitert haben.

14. Zellulares Telekommunikationssystem (S) mit
zumindest einer ersten Zelle (C1) eines ersten Zugangssystems,
zumindest einer zweiten Zelle (C2, C3) eines zweiten Zugangssystems und
einer Mobilstation (MS),
worin das System (S) konfiguriert ist,
eine Liste von zu messenden Basisstationen und deren jeweiligen Basisstationskennungen BSIC von einem Funknetz-Controller (RNC) der Mobilstation (MS) zu übertragen,
in der Mobilstation (MS) eine der besagten Basisstationen für Handover auszuwählen und ihre Basisstationskennung BSIC zu verifizieren und
die Mobilstation (MS) anzufordern, vor dem Handover einer Verbindung von der ersten Zelle (C1) zur zweiten Zelle (C2, C3) die Kennungsinformation der besagten zweiten Zelle zu verifizieren,
**dadurch gekennzeichnet, dass** die Verifizierung der besagten Kennungsinformation auf der jeweiligen, vom Funknetz-Controller (RNC) der Mobilstation (MS) übertragenen Basisstationskennung BSIC basiert, wobei das System konfiguriert ist,
zumindest ein Schwellenkriterium vorzubestimmen, das sich auf das Handover der Verbindung zur besagten zweiten Zelle (C2, C3) bezieht; und
das Handover der Verbindung zur besagten zweiten Zelle (C2, C3) zu unterbrechen, falls die Verifikation der besagten Kennungsinformation erfolglos ist und falls das besagte zumindest eine auf das Handover zur besagten zweiten Zelle (C2, C3) bezogene Schwellenkriterium erfüllt wird, wobei der Funknetz-Controller (RNC) vorgesehen ist, die Basisstationen, deren Basisstationskennung BSIC nicht verifiziert worden ist, aus der besagten Liste zu löschen, wenn eine nächste Handover-Messung benötigt wird.

15. System nach Anspruch 14, ferner **dadurch gekennzeichnet, dass** es konfiguriert ist, ein Handover der Verbindung zu einer anderen Zelle als der zweiten Zelle bereitzustellen, falls die Verifizierung der besagten Kennungsinformation erfolglos ist and falls zumindest ein auf das Handover zur besagten zweiten Zelle bezogene Schwellenkriterium erfüllt wird.

16. System nach Anspruch 14 oder 15, **dadurch gekennzeichnet, dass** das erste Zugangssystem das Funkzugangsnetz UTRAN von UMTS ist.

17. System nach Anspruch 14, 15 oder 16, **dadurch gekennzeichnet, dass** das zweite Zugangssystem ein Basisstationsteilsystem BSS von GSM ist.

18. System nach einem der vorhergehenden Ansprüche 14 bis 17, **dadurch gekennzeichnet, dass** es konfiguriert ist, das gescheiterte Handover dem Betriebs- und Wartungssystem zu melden.

19. Funknetz-Controller (RNC) in einem zellularen Telekommunikationssystem (S) mit
zumindest einer ersten Zelle (C1) eines ersten Zugangssystems,
zumindest einer zweiten Zelle (C2, C3) eines zweiten Zugangssystems und
einer Mobilstation (MS),
worin der Funknetz-Controller (RNC) vorgesehen ist,
eine Liste von zu messenden Basisstationen und deren jeweiligen Basisstationskennungen BSIC der Mobilstation (MS) zu übertragen und
die Mobilstation (MS) anzufordern, vor dem Handover einer Verbindung von der ersten Zelle (C1) zur zweiten Zelle (C2, C3) die Kennungsinformation über die besagte zweite Zelle zu verifizieren,
**dadurch gekennzeichnet, dass** die Verifizierung der besagten Kennungsinformation auf der jeweiligen, vom Funknetz-Controller (RNC) der Mobilstation (MS) übertragenen Basisstationskennung BSIC basiert, wobei der Funknetz-Controller (RNC) vorgesehen ist,
zumindest ein Schwellenkriterium aufrechtzuerhalten, das sich auf das Handover der Verbindung zur besagten zweiten Zelle bezieht; und
das Handover der Verbindung zur besagten zweiten Zelle (C2, C3) zu unterbrechen, falls die Verifizierung der besagten Kennungsinformation erfolglos ist und falls das besagte zumindest eine auf das Handover zur besagten zweiten Zelle bezogene Schwellenkriterium erfüllt wird, wobei der Funknetz-Controller (RNC) vorgesehen ist, die Basisstationen, deren Basisstationskennung BSIC nicht verifiziert worden ist, aus der besagten Liste zu löschen, wenn eine nächste Handover-Messung benötigt wird.

20. Funknetz-Controller (RNC) nach Anspruch 19, ferner **dadurch gekennzeichnet , dass** er vorgesehen ist, ein Handover der Verbindung zu einer anderen Zelle als der zweiten Zelle bereitzustellen, falls die Verifizierung der besagten Kennungsinformation erfolglos ist and falls zumindest ein auf das Handover zur besagten zweiten Zelle bezogene Schwellenkriterium erfüllt wird.

21. Funknetz-Controller (RNC) nach Anspruch 20 oder 20, **dadurch gekennzeichnet, dass** er vorgesehen ist, ein gescheitertes Handover dem Betriebs- und Wartungssystem zu melden.

## Revendications

1. Procédé de gestion d'un transfert intercellulaire d'une connexion d'un premier système d'accès radio à un deuxième système d'accès radio dans un système de télécommunications cellulaire, comprenant :
au moins une première cellule (C1) du premier système d'accès,
au moins une deuxième cellule (C2, C3) du deuxième système d'accès, et
une station mobile,
le procédé comprenant les étapes consistant à :
transmettre, à partir d'un contrôleur de réseau radio (ou RNC, acronyme de Radio Network Controller) vers la station mobile (ou MS, acronyme de Mobile Station), une liste des stations de base sur lesquelles il convient d'exécuter des mesures, et de leurs codes d'identité de station de base respectifs BSIC (acronyme de Base Station Identity Code),
sélectionner, dans la station mobile (MS), l'une desdites stations de base pour un transfert intercellulaire et vérifier son code d'identité de station de base BSIC, et
demander (2 - 4) à la station mobile (MS) de vérifier les informations d'identité qui concernent ladite deuxième cellule, avant le transfert intercellulaire de la connexion de la première cellule (C1) à la deuxième cellule (C2, C3),
**caractérisé en ce que** la vérification desdites informations d'identité est basée sur le code d'identité de station de base respectif BSIC transmis par le contrôleur de réseau radio (RNC) à la station mobile (MS), dans lequel le procédé comprend les étapes consistant à :
prédéterminer au moins un critère de seuil qui concerne le transfert intercellulaire de la connexion vers ladite deuxième cellule ; et
mettre fin (2 - 9) au transfert intercellulaire de la connexion vers ladite deuxième cellule, si la vérification desdites informations d'identité n'est pas couronnée de succès, et si ledit au moins un critère de seuil qui concerne le transfert intercellulaire vers ladite deuxième cellule est satisfait, dans lequel les stations de base, dont le code d'identité de station de base BSIC n'a pas été vérifié, sont retirées de ladite liste dans le contrôleur de réseau radio (RNC) quand une mesure suivante de transfert intercellulaire est requise.

2. Procédé selon la revendication 1, **caractérisé en outre par** l'étape consistant à fournir un transfert intercellulaire de la connexion vers une cellule autre que la deuxième cellule, si la vérification desdites informations d'identité n'est pas couronnée de succès et si au moins un critère de seuil qui concerne ledit transfert intercellulaire vers ladite deuxième cellule est satisfait.

3. Procédé selon la revendication 1 ou la revendication 2, **caractérisé par le fait que** le critère de seuil comprend un temps limite maximum pour vérifier les informations d'identité qui concernent une certaine cellule.

4. Procédé selon la revendication 1, la revendication 2 ou la revendication 3, **caractérisé par le fait que** le critère de seuil comprend un nombre maximum de tentatives de vérification consécutives des informations d'identité qui concernent une certaine cellule.

5. Procédé selon l'une quelconque des revendications précédentes 1 à 4, **caractérisé par le fait que** le critère de seuil comprend un nombre maximum de tentatives de vérification consécutives des informations d'identité d'une certaine cellule, pendant un certain temps.

6. Procédé selon l'une quelconque des revendications précédentes 1 à 5, **caractérisé en ce que** le critère de seuil est propre à une cellule.

7. Procédé selon l'une quelconque des revendications précédentes 1 à 6, **caractérisé en ce que** le critère de seuil est propre à une connexion.

8. Procédé selon l'une quelconque des revendications précédentes 1 à 7, **caractérisé en ce que** le critère de seuil est propre à une station mobile.

9. Procédé selon l'une quelconque des revendications précédentes 1 à 8, **caractérisé en ce que** le critère de seuil est propre à une intensité de signal.

10. Procédé selon l'une quelconque des revendications précédentes 1 à 9, **caractérisé en ce que** le premier système d'accès est un réseau d'accès radio (ou RAN, acronyme de Radio Access Network) UMTS (acronyme de Universal Mobile Télécommunication System, ce qui signifie système universel de télécommunication avec les mobiles).

11. Procédé selon l'une quelconque des revendications précédentes 1 à 10, **caractérisé en ce que** le deuxième système d'accès est un sous-système de station de base (ou BSS, acronyme de Base Station Subsystem) GSM (acronyme de Global System for Mobile communications, ce qui signifie système mondial de communication avec les mobiles).

12. Procédé selon l'une quelconque des revendications précédentes 1 à 11, **caractérisé par** le fait de rapporter un transfert intercellulaire qui a échoué au système d'exécution et de maintenance du système de télécommunications.

13. Procédé selon l'une quelconque des revendications précédentes 1 à 12, **caractérisé par le fait que** le contrôleur de réseau radio :
prédétermine au moins un critère de seuil qui concerne le transfert intercellulaire de la connexion vers ladite deuxième cellule ; et
cesse de proposer un transfert intercellulaire vers la deuxième cellule après un nombre prédéfini de connexions dont les transferts intercellulaires ont échoué vers ladite cellule.

14. Système de télécommunications cellulaire (S) comprenant :
au moins une première cellule (C1) d'un premier système d'accès,
au moins une deuxième cellule (C2, C3) d'un deuxième système d'accès, et
une station mobile (MS),
dans lequel le système (S) est configuré de manière à :
transmettre, à partir d'un contrôleur de réseau radio (RNC) vers la station mobile (MS), une liste des stations de base sur lesquelles il convient d'exécuter des mesures, et de leurs codes d'identité de station de base respectifs BSIC,
sélectionner, dans les stations mobiles (MS), l'une desdites stations de base pour un transfert intercellulaire et vérifier son code d'identité de station de base BSIC, et
demander à la station mobile (MS) de vérifier les informations d'identité de ladite deuxième cellule (C2, C3), avant le transfert intercellulaire d'une connexion entre la première cellule (C1) et la deuxième cellule (C2, C3),
**caractérisé en ce que** la vérification desdites informations d'identité est basée sur le code d'identité de station de base respectif BSIC transmis par le contrôleur de réseau radio (RNC) à la station mobile (MS), dans lequel le système est configuré de manière à :
prédéterminer au moins un critère de seuil qui concerne le transfert intercellulaire de la connexion vers ladite deuxième cellule (C2, C3) ; et
mettre fin au transfert intercellulaire de la connexion vers ladite deuxième cellule (C2, C3), si la vérification desdites informations d'identité n'est pas couronnée de succès, et si ledit au moins un critère de seuil qui concerne un transfert intercellulaire vers ladite deuxième cellule (C2, C3) est satisfait, dans lequel le contrôleur de réseau radio (RNC) est apte à retirer de ladite liste, quand une mesure suivante de transfert intercellulaire est requise, les stations de base dont le code d'identité de station de base BSIC n'a pas été vérifié.

15. Système selon la revendication 14, **caractérisé en outre par le fait qu'**il est configuré de manière à fournir un transfert intercellulaire de la connexion vers une cellule autre que la deuxième cellule, si la vérification desdites informations d'identité n'est pas couronnée de succès et si au moins un critère de seuil qui concerne ledit transfert intercellulaire vers ladite deuxième cellule est satisfait.

16. Système selon la revendication 14 ou la revendication 15, **caractérisé en ce que** le premier système d'accès est le réseau d'accès radio UTRAN (acronyme de Universal Terrestrial Radio Access Network, ce qui signifie réseau d'accès radio terrestre universel) de l'UMTS.

17. Système selon la revendication 14, la revendication 15 ou la revendication 16, **caractérisé en ce que** le deuxième système d'accès est un sous-système de station de base BSS du GSM.

18. Système selon l'une quelconque des revendications précédentes 14 à 17, **caractérisé en ce qu'**il est configuré de manière à rapporter un transfert intercellulaire qui a échoué au système d'exécution et de maintenance.

19. Contrôleur de réseau radio (RNC) dans un système de télécommunications cellulaire (S) comprenant :
au moins une première cellule (C1) d'un premier système d'accès,
au moins une deuxième cellule (C2, C3) d'un deuxième système d'accès, et
une station mobile (MS),
dans lequel le contrôleur de réseau radio (RNC) est conçu de manière à :
transmettre à la station mobile (MS), une liste des stations de base sur lesquelles il convient d'exécuter des mesures, et de leurs codes d'identité de station de base respectifs BSIC, et
avant le transfert intercellulaire d'une connexion de la première cellule (C1) à la deuxième cellule (C2, C3), demander à la station mobile (MS) de vérifier les informations d'identité qui concernent ladite deuxième cellule,
**caractérisé en ce que** la vérification desdites informations d'identité est basée sur le code d'identité de station de base respectif BSIC transmis par le contrôleur de réseau radio (RNC) à la station mobile (MS), dans lequel le contrôleur de réseau radio (RNC) est conçu de manière à :
maintenir au moins un critère de seuil qui concerne le transfert intercellulaire de la connexion vers ladite deuxième cellule ; et
mettre fin au transfert intercellulaire de la connexion vers ladite deuxième cellule (C2, C3), si la vérification desdites informations d'identité n'est pas couronnée de succès, et si ledit au moins un critère de seuil qui concerne un transfert intercellulaire vers ladite deuxième cellule est satisfait, dans lequel le contrôleur de réseau radio (RNC) est apte à retirer de ladite liste, quand une mesure suivante de transfert intercellulaire est requise, les stations de base dont le code d'identité de station de base BSIC n'a pas été vérifié.

20. Contrôleur de réseau radio (RNC) selon la revendication 19, **caractérisé en outre par le fait qu'**il est conçu de manière à fournir un transfert intercellulaire de la connexion vers une cellule autre que la deuxième cellule, si la vérification desdites informations d'identité n'est pas couronnée de succès et si au moins un critère de seuil qui concerne ledit transfert intercellulaire vers ladite deuxième cellule est satisfait.

21. Contrôleur de réseau radio (RNC) selon l'une quelconque des revendications précédentes 20 ou 20, **caractérisé en ce qu'**il est conçu de manière à rapporter un transfert intercellulaire qui a échoué au système d'exécution et de maintenance.
